# EUROPEAN PATENT APPLICATION

(11) **EP 4 797 374 A1**
(43) Date of publication of application: **26.08.2026**
(21) Application number: 25706271.1
(22) Date of filing: 06.01.2025
(51) Int. Cl.: H01M 10/42

(54) **LITHIUM-REPLENISHING AGENT AND PREPARATION METHOD THEREFOR, POSITIVE ELECTRODE SHEET AND SECONDARY BATTERY**

(30) Priority: 30.12.2024 CN 202411978505
(71) Applicant: Hubei Wanrun New Energy Technology Co., Ltd., Shiyan, Hubei 442500 (CN)
(72) Inventor: WANG, Qin, Shiyan, Hubei 442500 (CN); PENG, Tangping, Shiyan, Hubei 442500 (CN); YU, Zhihao, Shiyan, Hubei 442500 (CN); LV, Fei, Shiyan, Hubei 442500 (CN)
(74) Representative: Murgitroyd & Company
(86) International application number: PCT/CN2025/070788
(87) International publication number: WO 2026/143715

(57) **Abstract**

The present application provides a lithium supplement belonged to the technical field of energy storage. The lithium supplement includes lithium phosphite and a coating layer coating the lithium phosphite. A material of the coating layer includes iron boride. The present application can address the issues of poor safety and stability, high costs, and residual in lithium supplement process associated with lithium supplementing materials in related art.

## Description

### TECHNICAL FIELD

The present application relates to the technical field of energy storage, in particular, to a lithium supplement and a preparation method therefor, a cathode plate, and a secondary battery.

### BACKGROUND

Lithium-ion batteries are widely used in the field of energy storage, such as in new energy vehicle batteries. Due to their advantages, including high theoretical capacity, stable operating voltage, high energy density, long cycle life, and good chemical stability, lithium-ion batteries have become one of the most widely used secondary batteries in the fields such as new energy vehicles, etc.

During the initial charging process of a lithium-ion battery, a solid electrolyte interphase (SEI) film forms on the surface of the anode of the battery, consuming a significant amount of active lithium. This results in irreversible lithium loss, leading to a decline in the energy density and cycling performance of the lithium-ion battery, thus restricting the application of lithium-ion batteries. To address this issue, pre-lithiation or lithium supplementation are commonly adopted methods to replenish the lost active lithium, thereby improving the energy density and cycle stability of lithium-ion batteries.

Compared to anode lithium supplementation, cathode lithium supplementation has attracted more attention due to its easier operation and superior safety. However, during the initial charging process, most lithium supplementing materials with high lithium contents tend to generate gas, which can cause the battery volume to expand and, consequently, cause safety and stability issues of the batteries.

### SUMMARY

In view of the technical issues mentioned in the background, in order to address the issues of poor safety and stability as well as high costs associated with lithium supplementing materials in related art, the present application provides a lithium supplement and a preparation method thereof, a cathode plate, and a secondary battery.

In a first aspect, an embodiment of the present application provides a lithium supplement, including lithium phosphite and a coating layer coating the lithium phosphite;

wherein a material of the coating layer includes iron boride.

In the technical solution of the present embodiment, the lithium supplement adopts a coating layer containing iron boride, which is coated on the lithium phosphite. As a result, on the one hand, after lithium is removed from a lithium phosphite, two lithium ions and metaphosphoric acid can be produced, without generating waste gas, which is beneficial to improving safety. On the other hand, coating the lithium phosphite with the coating layer can reduce direct exposure of the lithium phosphite to the external environment, which is conducive to preventing phosphite ions from being oxidized into phosphate, thus reducing the formation of "dead lithium", thereby improving the lithium supplementation effect. Even if a small amount of lithium phosphite leaks out, it will react with the residual alkali on the surface of the lithium supplement to form a salt, preventing corrosion of the lithium supplement and improving the stability of lithium supplement. Furthermore, metaphosphoric acid formed from the delithiation of lithium phosphite has strong hygroscopicity. Thus, this delithiation product of lithium phosphite can absorb residual moisture present in the lithium supplement, which can help to prevent the moisture from entering and decomposing the electrolyte, thereby further enhancing the performance stability of both the lithium supplement and the battery. Lastly, the stability and electrical conductivity of the lithium supplement can both be improved by coating the lithium phosphite with the coating layer containing iron boride, due to the high stability and good electrical conductivity of the material of the coating layer. Additionally, compared to the lithium supplementing materials with high lithium contents such as lithium-rich lithium iron oxides used in related art, the raw materials for the present lithium supplement are inexpensive, resulting in a lower cost.

In some embodiments, a thickness of the coating layer is in a range from 0.6 µm to 2 µm, and/or a coverage ratio by the coating layer is greater than or equal to 93%.

In these embodiments, the thickness of and coverage ratio by the coating layer are controlled within the above ranges, which are conducive to complete coating of the lithium phosphite with the coating layer, reducing leakage of the lithium phosphite while preventing the coating layer from hindering transfer of lithium ions from the lithium phosphite.

In some embodiments, the lithium phosphite is in a spheroidal shape, with a sphericity of 0.81 to 0.87; and/or a particle size distribution of the lithium supplement satisfies: a D50 particle size is in a range from 0.3 µm to 3.8 µm, a D10 particle size is in a range from 0.1 µm to 1.9 µm, and a D90 particle size is in a range from 1.3 µm to 6.4 µm.

In these embodiments, the sphericity of the lithium phosphite is controlled within the above range, which is conducive to adjusting the sphericity of the lithium phosphite, facilitating more complete coating of the lithium phosphite with the coating layer. Moreover, when the particle size distribution of the lithium supplement satisfies the D50 particle size ranged from 0.3 µm to 3.8 µm, the D10 particle size ranged from 0.1 µm to 1.9 µm, and the D90 particle size ranged from 1.3 µm to 6.4 µm, the lithium supplement has a concentrated particle size distribution and a relatively small particle size, which can effectively reduce graininess during the coating process when applied in the cathode plate, thereby improving the flatness of the cathode plate.

In some embodiments, a tap density of the lithium supplement is in a range from 1.43 g/mL to 1.59 g/mL; and/or a compacted density of the lithium supplement is in a range from 2.48 g/mL to 2.76 g/mL; and/or a specific surface area of the lithium supplement is in a range from 3.47 m²/g to 4.79 m²/g.

In these embodiments, the tap density and compacted density of the lithium supplement are controlled within the above ranges, which is conducive to effectively improving the energy density of the lithium supplement. In addition, the specific surface area of the lithium supplement is controlled within the above range, which is beneficial to allowing the lithium supplement to have an appropriate contact area with the electrolyte and other components when applied to a secondary battery, thereby fully exerting the lithium supplementation effect of the lithium supplement.

In a second aspect, an embodiment of the present application provides a method for preparing a lithium supplement, including following steps:
providing a first slurry including lithium phosphite;
mixing the first slurry with sodium borohydride and ferrous chloride, and subjecting the mixture to a first reaction treatment to obtain a crude product; and
filtering, washing, and drying the crude product to obtain the lithium supplement,
wherein the lithium supplement includes lithium phosphite and a coating layer coating the lithium phosphite, and a material of the coating layer includes iron boride.

In the technical solution of the present embodiment, after preparing the slurry of lithium phosphite, the slurry of lithium phosphite is mixed with sodium borohydride and ferrous chloride, and sodium borohydride reacts with ferrous chloride to form iron boride, thereby obtaining a lithium supplement with an iron boride coating layer on the surface of the lithium phosphite. In this lithium supplement, on the one hand, after lithium is removed from the lithium phosphite, two lithium ions and metaphosphoric acid can be produced, without generating waste gas, which is beneficial to improving safety. On the other hand, coating the lithium phosphite with the coating layer can reduce direct exposure of the lithium phosphite to the external environment, which is conducive to preventing phosphite ions from being oxidized into phosphate, thus reducing the formation of "dead lithium", thereby improving the lithium supplementation effect. Even if a small amount of lithium phosphite leaks out, it will react with the residual alkali Li₂O on the surface of the lithium supplement to form a salt, preventing corrosion of the lithium supplement and improving the stability of the lithium supplement. Furthermore, metaphosphoric acid formed from the delithiation of lithium phosphite has strong hygroscopicity. Thus, this delithiation product of lithium phosphite can absorb residual moisture present in the lithium supplement, which can help to prevent the moisture from entering and decomposing the electrolyte, thereby further enhancing the performance stability of both the lithium supplement and the battery. Lastly, the stability and electrical conductivity of the lithium supplement can both be improved by coating the lithium phosphite with the coating layer containing iron boride, due to the high stability and good electrical conductivity of the material of the coating layer. Additionally, compared to the lithium supplementing materials with high lithium contents such as lithium-rich lithium iron oxides used in related art, the raw materials for the present lithium supplement are inexpensive, resulting in a lower cost.

In some embodiments, the step of providing the first slurry including lithium phosphite includes:
obtaining a first solution of phosphorous acid, wherein a solvent in the first solution includes at least one of methanol, ethanol, glycerol, propanol, or propylene glycol;
adding a lithium salt to the first solution of phosphorous acid, and subjecting to a second reaction treatment to obtain a first reaction slurry;
grinding the first reaction slurry until the lithium phosphite in the first reaction slurry reaches a preset particle size, thereby obtaining the first slurry.

In these embodiments, by adding the lithium salt to the first solution of phosphorous acid and performing the second reaction treatment, lithium phosphite crystallizes and precipitates from the first solution due to its low solubility in the above-described solvent, thereby obtaining the first reaction slurry. Subsequently, by grinding the first reaction slurry, the lithium phosphite within the first reaction slurry is ground to a preset particle size, thereby obtaining the first slurry. In this case, the first slurry is maintained to be acidic by using phosphorous acid as the raw material, which, in the subsequent first reaction treatment, ensures that the first reaction treatment occurs under an acidic condition. This is beneficial for the generation of iron boride, which is chemically plated onto the surface of lithium phosphite, thereby forming the coating layer.

In some embodiments, a molar ratio of phosphorous acid, sodium borohydride, and ferrous chloride is 1: (0.05 to 0.1): (0.025 to 0.05); and/or
a temperature of the second reaction treatment is in a range from 35°C to 55°C, and a duration of the second reaction treatment is in a range from 0.5 hours to 1 hour; and/or
the lithium salt includes at least one of lithium carbonate, lithium sulfite, or lithium bicarbonate; and/or
a molar ratio of lithium in the lithium salt to phosphorous acid is in a range from 1.8:1 to 1.9:1; and/or
the preset particle size is in a range from 0.3 µm to 3 µm.

In these embodiments, by controlling the molar ratio of phosphorous acid, sodium borohydride, and ferrous chloride within the above range, the first reaction treatment can be carried out under an acidic condition with an excess of sodium borohydride, which facilitates the reaction between sodium borohydride and ferrous chloride and promotes the formation of a suitable thickness of the coating layer on the lithium phosphite. The temperature and duration of the second reaction treatment are controlled within the above ranges, which facilitate thorough proceeding of the reaction between the lithium salt and phosphorous acid to generate lithium phosphite. Using lithium carbonate, lithium sulfite, and/or lithium bicarbonate as the lithium salts ensures that these salts react with phosphorous acid to generate lithium phosphite and gases, thus reducing impurity introduction during the preparation of lithium phosphite. By controlling the molar ratio of lithium in the lithium salt to phosphorous acid in the range from 1.8:1 to 1.9:1, phosphorous acid can be slightly excessive, which can maintain an acidic condition for the first reaction treatment. The preset particle size is controlled in the range from 0.3 µm to 3 µm, which facilitates formation of lithium phosphite with a concentrated particle size distribution and a relatively small particle size. Such lithium phosphite is beneficial for coating with the coating layer and for obtaining a lithium supplement with a concentrated particle size distribution and a relatively small particle size.

In some embodiments, the step of mixing the first slurry with sodium borohydride and ferrous chloride, and subjecting the mixture to the first reaction treatment to obtain the crude product includes:
mixing a solution containing sodium borohydride, a solution containing ferrous chloride, and the first slurry, and then holding for a first preset time at a first reaction temperature to obtain the crude product.

In these embodiments, after the solution containing sodium borohydride, the solution containing ferrous chloride, and the first slurry are mixed together, the mixture is held at the first reaction temperature for the first preset time, which facilitates a complete reaction between sodium borohydride and ferrous chloride and uniformly coats the lithium phosphite with the reaction product, improving the uniformity of the coating layer in the crude product.

In some embodiments, the mixing is performed for 60 minutes to 120 minutes at a temperature of 25°C to 45°C; and/or
the first reaction temperature is in a range from 25°C to 45°C; and/or
the first preset time is in a range from 30 minutes to 60 minutes.

In these embodiments, by controlling the mixing time and temperature, the uniformity of the mixture of the first slurry with sodium borohydride and ferrous chloride can be improved, which is beneficial for the complete coating of lithium phosphite. The first reaction temperature is controlled in the range from 25°C to 45°C, and/or the first preset time is controlled in the range from 30 minutes to 60 minutes, which facilitates sufficient the formation of iron boride coated on the lithium phosphite, and thus facilitates the formation of the coating layer with an appropriate thickness and coating rate on the surface of the lithium phosphite. Additionally, by performing the mixing and the first reaction treatment at the same temperature, iron boride can be formed during the mixing, promoting the complete formation of iron boride, improving the uniformity and coating rate of the coating layer.

In some embodiments, the drying is performed at a temperature in a range from 80°C to 100°C and a vacuum degree in a range from -0.09 MPa to -0.07 MPa.

In some embodiments, by controlling the drying temperature and vacuum degree, the introduction of oxygen and water vapor from air is minimized, which can improve the material stability of the lithium supplement and reduce the formation of by-products such as lithium phosphate.

In a third aspect, an embodiment of the present application provides a cathode plate, including a current collector and a cathode material disposed on at least one side of the current collector along a thickness direction of the current collector. The cathode material includes the lithium supplement as described in the first aspect or the lithium supplement prepared by the method as described in the second aspect.

In the present embodiment, the cathode plate includes the lithium supplement, and the lithium supplement includes an iron boride coating layer coated on the lithium phosphite, thereby improving safety, stability, electrical conductivity, and lithium supplementation effect while being cost-effective. As a result, the safety, stability, electrical conductivity, and lithium supplementation effect of the cathode plate are improved, the cost of the cathode plate is reduced, and the capacity of the battery using the cathode plate can be improved.

In a fourth aspect, an embodiment of the present application provides a secondary battery, including a cathode plate, an anode plate, and a separator. The cathode plate is selected from the cathode plate described in the third aspect.

In the present embodiment, the secondary battery includes the above-describe cathode plate, and thus possesses the advantages of the cathode plate.

The above description is merely a summary of the technical solutions of the present application. In order to clearly illustrate the technical solutions of the present application for implementation according to the contents of the specification, as well as to make the above and other objectives, features, and advantages of the present application more apparent and comprehensible, specific embodiments of the present application are described below.

### BRIEF DESCRIPTION OF THE DRAWINGS

In order to clearly illustrate the technical solutions of the present application, the drawings used in the present application will be briefly described below. Apparently, the drawings described below are merely for some embodiments of the present application. For those of ordinary skill in the art, other drawings can be obtained according to the disclosed drawings without any creative effort.
FIG. 1 is a flowchart of a preparation method of a lithium supplement according to an embodiment of the present application.
FIG. 2 shows a scanning electron microscope (SEM) image of a lithium supplement provided in Example 1 of the present application.
FIG. 3 shows a particle size distribution graph of the lithium supplement provided in Example 1 of the present application.

### DETAILED DESCRIPTION

The embodiments of the technical solutions of the present application will be described more comprehensively below in conjunction with the accompanying drawings. The embodiments below are only for clearly illustrating the technical solutions of the present application, and thus are merely examples rather than limitations on the patent protection scope of the present application.

Unless otherwise defined, all technical and scientific terms used herein have the same meaning as commonly understood by those of ordinary skill in the art to which the present application pertains. The terms used in the specification of the present application herein are for the purpose of describing specific embodiments only and are not intended to limit the present application. The terms "include", "have", and any variations thereof in the specification, claims, and the above drawing description of the present application are intended to encompass non-exclusive inclusions.

The technical terms "first" and "second" mentioned in the description of the embodiments of the present application are merely used for distinguishing different objects, and cannot be construed as indicating or implying a relative importance, or implicitly specifying the number, specific order or primary-secondary relationship of the indicated technical features. In the description of the embodiments of the present application, "a plurality of" means two or more, unless otherwise defined explicitly and specifically.

The term "embodiment" means that specific features, structures, or characteristics described with reference to the embodiment can be included in at least one embodiment of the present application. The term "embodiment" appeared in various places in the specification does not necessarily refer to the same embodiment or an independent or alternative embodiment that is mutually exclusive of other embodiments. It can be explicitly and implicitly understood by those skilled in the art that the embodiment described herein can be combined with other embodiments.

The term "and/or" in the description of the embodiments of the present application merely describes a relationship between associated objects, indicating that three types of relationships may exist. For example, A and/or B can indicate three situations: only A exists, both A and B exist, and only B exists. In addition, the character "/" herein generally represents that the former and latter associated objects are in an "or" relationship.

The term "multiple" in the description of the embodiments of the present application means two or more. Similarly, "multiple groups" means two or more groups, and "multiple pieces" means two or more pieces.

In the description of the embodiments of the present application, the orientation and position relationships indicated by the technical terms "center", "lengthwise", "crosswise", "length", "width", "thickness", "up", "down", "front", "back", "left", "right" , "vertical", "horizontal", "top", "bottom", "inside", "outside", "clockwise", "counterclockwise", "axial", "radial", "circumferential", etc., are based on the orientation or position relationships as shown in the accompanying drawings, it is only for the convenience of describing the embodiments of the present application and simplifying the description, rather than indicating or implying that the device or element referred to thereby must have a specific orientation and be constructed and operated in a specific orientation, and thus it cannot be understood as limitations on the embodiments of the present application.

In the description of the embodiments of the present application, unless otherwise specified and limited, the terms "installation", "interconnection", "connection", "fixation", and the like should be understood in a broad sense, for example, it can be either fixed connection, or detachable connection, or integrated connection; it can be either mechanical connection or electrical connection; and it can be either direct connection, or indirect connection through intermediate media, or it can be the internal communication between two components or the interaction between two components. For those of ordinary skill in the art, the specific meanings of the above terms in the embodiments of the present application can be understood according to the specific situations.

The conventional cathode lithium supplementing materials with high lithium contents commonly include lithium-rich lithium iron oxides, such as lithium-rich lithium iron oxide (Li₅FeO₄), lithium-rich lithium nickel oxide (Li₂NiO₂), etc., and binary lithium compounds, such as Li₃N, Li₂O₂, etc. Among them, the lithium-rich compounds suffer from poor air stability, high hygroscopicity, and high hydrolyzability, and the generation of gases (such as oxygen). Moreover, the lithium-rich compounds are sensitive to water vapor and carbon dioxide in the air, leading to reactions that produce residual alkali on the surface, which hinders slurry preparation and lithium ion migration. Moreover, the lithium-rich compounds also have issues of poor air stability, high costs, and require lithium oxide as a raw material, which is highly alkaline and difficult to process. In addition, in the lithium supplementation process, a large amount of oxygen is released and residual LiFeO₂ is formed, which may negatively affect the performance of the battery cells. The binary lithium compounds, on the other hand, have a high voltage platform and tend to release oxygen during the initial charging process, which reacts with the electrolyte and disrupts the formation of a stable SEI film between the cathode and the electrolyte, thereby deteriorating battery stability and even potentially causing safety issues.

Therefore, how to provide a lithium supplement with higher safety and stability, and lower cost is a problem that urgently needs to be addressed.

In order to solve the above technical issues, embodiments of the present application provide a lithium supplement and a preparation method thereof, a cathode plate, and a secondary battery. The lithium supplement provided in the embodiments of the present application exhibits advantages such as good stability, high safety, low cost, and has an excellent lithium supplementation effect. When applied to a cathode plate of a battery, the lithium supplement effectively improves the coulombic efficiency of the cathode material, compensates for lithium loss at the anode due to the formation of the SEI film, and thus enhances the capacity and cycling performance of the secondary battery with the lithium supplement. Consequently, the electrochemical performance of both the cathode plate and the secondary battery can be improved.

The electrical devices provided in the embodiments of the present application can include, but are not limited to, smartphones, tablets, laptops, electric toys, power tools, electric bicycles, electric vehicles, ships, and spacecraft. The electric toys can include stationary or mobile electric toys, such as gaming consoles, electric toy cars, electric toy boats, and electric toy airplanes. The spacecraft can include aircraft, rockets, space shuttles, and spaceships.

In a first aspect, an embodiment of the present application provides a lithium supplement, including lithium phosphite and a coating layer coating the lithium phosphite, wherein a material of the coating layer includes iron boride.

In the lithium supplementation using the lithium supplement, on the one hand, delithiation of the lithium phosphite can produce two lithium ions and metaphosphoric acid, without generating waste gas, which is beneficial to improving safety. On the other hand, coating the lithium phosphite with the coating layer can reduce direct exposure of the lithium phosphite to the external environment, which reduces phosphate oxidized from phosphite ions, reducing the formation of "dead lithium", thereby improving the lithium supplementation effect. Moreover, even if a small amount of lithium phosphite leaks out, it will react with the residual alkali (e.g., Li₂O) on the surface of the lithium supplement to form a salt, thereby preventing corrosion of the lithium supplement and improving the stability of the lithium supplement. Furthermore, metaphosphoric acid formed from the delithiation of lithium phosphite has strong hygroscopicity. Thus, this delithiation product of lithium phosphite can absorb residual moisture present in the lithium supplement, which can help to prevent the moisture from entering and decomposing the electrolyte, thereby further enhancing the performance stability of both the lithium supplement and the battery.

Furthermore, the stability and electrical conductivity of the lithium supplement can both be improved by coating the lithium phosphite with the coating layer containing iron boride, due to the high stability and good electrical conductivity of the material of the coating layer. Additionally, iron boride has high stability and good stability, which allows iron boride to serve as a conducting agent in the cathode plate.

Furthermore, compared to the lithium supplementing materials with high lithium contents such as lithium-rich lithium iron oxides used in related art, the raw materials for the present lithium supplement are inexpensive, effectively reducing the cost of the lithium supplement.

Specifically, when the lithium supplement is applied to cathode materials, the lithium phosphite in the lithium supplement functions for lithium supplementation. After delithiation, two lithium ions and metaphosphoric acid are generated (according to the reaction equation in Formula (1), without generating waste gases, which is beneficial to improving safety. Meanwhile, coating the lithium phosphite with the coating layer can prevent the leakage of lithium phosphite. Even if a small amount of lithium phosphite leaks out, it will react to form a salt due to alkalinity of the residual alkali on the surface of the lithium supplement (according to the reaction equations in Formulas (2) and (3), preventing corrosion of the lithium supplement and improving its stability. Furthermore, metaphosphoric acid has strong hygroscopicity, and thus can absorb residual moisture present in the lithium supplement (according to the reaction equation in Formula (2), which can help to prevent the moisture from entering and decomposing the electrolyte. In addition, coating the lithium phosphite with the coating layer can prevent phosphite ions from being oxidized into phosphate, and the material of the coating layer has high stability and good electrical conductivity, thereby improving both of the stability and the electrical conductivity of the lithium supplement.

Li₂HPO₃→2Li+2HPO₃ Formula (1);

HPO₃+H₂O→H₃PO₄ Formula (2);

Li₂O+2H₃PO₄→2LiH₂PO₄+H₂O Formula (3).

In some embodiments, a thickness of the coating layer is in a range from 0.6 µm to 2 µm. Preferably, the thickness of the coating layer is in a range from 1 µm to 2 µm. For example, the thickness of the coating layer can be 0.63 µm, 0.67 µm, 1 µm, 1.2 µm, 1.3 µm, 1.4 µm, 1.5 µm, 1.6 µm, 1.7 µm, 1.8 µm, 1.9 µm, or 2 µm, etc.

In these embodiments, the thickness of the coating layer is controlled within the above range, which facilitates complete coating of the lithium phosphite with the coating layer, reducing the leakage of the lithium phosphite, while preventing the coating layer from hindering transfer of lithium ions from the lithium phosphite.

In some embodiments, the material of the coating layer is iron boride.

In some embodiments, a coverage ratio by the coating layer is greater than or equal to 93%. The coating rate refers to the percentage of the surface area of lithium phosphite covered by the coating layer in the total surface area of the lithium phosphite. Preferably, the coverage ratio by the coating layer is in a range from 93% to 99%. More preferably, the coverage ratio by the coating layer is in a range from 94% to 99%. For example, the coverage ratio can be 95%, 96%, 97%, 98%, 99%, or 100%, etc. The lithium phosphite can be fully coated with the coating layer, reducing the leakage of the lithium phosphite and preventing a direct exposure of the lithium phosphite to the external environment, which is beneficial to improving the lithium supplementation effect.

In some embodiments, the surface of the lithium phosphite is relatively smooth, which is beneficial to complete coating of the lithium phosphite with the coating layer.

In some embodiments, the lithium supplement is spheroidal, and a sphericity of the lithium supplement is greater than 0.8. For example, the sphericity of the lithium supplement can be 0.81, 0.82, 0.83, 0.84, 0.85, 0.9, 0.92, 0.94, 0.95, or 0.99, etc.

In some embodiments, the sphericity of the lithium supplement is in a range from 0.81 to 0.87. For example, the sphericity of the spheroid can be 0.81, 0.82, 0.83, 0.84, 0.85, 0.86, or 0.87, etc.

In some embodiments, a span of particle size, which is equal to (D90-D10)/D50, of the lithium supplement is in a range from 0.7 to 4. The particle size distribution of the lithium supplement is concentrated, which is beneficial to reducing the graininess of the lithium supplement applying to the cathode plate, thereby improving the flatness of the cathode plate.

In some embodiments, a particle size distribution of the lithium supplement satisfies: a D50 particle size is in a range from 0.3 µm to 3.8 µm, a D10 particle size is in a range from 0.1 µm to 1.9 µm, and a D90 particle size is in a range from 1.3 µm to 6.4 µm. The D50, D10, and D90 particle sizes are determined by using a laser particle size distribution analyzer. The D50 particle size refers to a corresponding particle size when the cumulative volume distribution of the lithium supplement reaches 50%. The D10 particle size refers to a corresponding particle size when the cumulative volume distribution of the lithium supplement reaches 10%. The D90 particle size refers to a corresponding particle size when the cumulative volume distribution of the lithium supplement reaches 90%.

For example, the D50 particle size can be 0.3 µm, 0.5 µm, 0.7 µm, 0.8 µm, 1.0 µm, 1.5 µm, 1.7 µm, 1.9 µm, 2.0 µm, 2.2 µm, 2.4 µm, 2.5 µm, 2.7 µm, 2.9 µm, 3.0 µm, 3.1 µm, 3.5 µm, or 3.9 µm; the D10 particle size can be 0.1 µm, 0.2 µm, 0.3 µm, 0.5 µm, 0.8 µm, 0.9 µm, 1.0 µm, 1.3 µm, 1.6 µm, 1.7 µm, or 1.9 µm; the D90 particle size can be 1.3 µm, 1.4 µm, 1.5 µm, 1.7 µm, 1.8 µm, 1.9 µm, 2.0 µm, 2.5µm, 2.9 µm, 3.0 µm, 3.2 µm, 3.5 µm, 3.6 µm, 3.8 µm, 4.0 µm, 4.2 µm, 4.8 µm, 4.9 µm, 5.0 µm, 5.2 µm, 5.5 µm, 5.8 µm, 6.0 µm, 6.3 µm, or 6.4 µm.

As the lithium supplement has the D50 particle size ranged from 0.3 µm to 3.8 µm, the D10 particle size ranged from 0.1 µm to 1.9 µm, and the D90 particle size ranged from 1.3 µm to 6.4 µm, the lithium supplement has a concentrated particle size distribution and a relatively small particle size, which can effectively reduce the graininess during the coating process when applied in the cathode plate, thereby improving the flatness of the cathode plate.

In some embodiments, a tap density of the lithium supplement is in a range from 1.43 g/mL to 1.59 g/mL; and/or a compacted density of the lithium supplement is in a range from 2.48 g/mL to 2.76 g/mL; and/or a specific surface area of the lithium supplement is in a range from 3.47 m²/g to 4.79 m²/g.

For example, the tap density of the lithium supplement can be 1.43 g/mL, 1.45 g/mL, 1.46 g/mL, 1.48 g/mL, 1.5 g/mL, 1.52 g/mL, 1.53 g/mL, 1.55 g/mL, 1.56 g/mL, 1.57 g/mL, or 1.59 g/mL.

The compacted density of the lithium supplement can be 2.48 g/mL, 2.50 g/mL, 2.52 g/mL, 2.55 g/mL, 2.58 g/mL, 2.60 g/mL, 2.62 g/mL, 2.64 g/mL, 2.65 g/mL, 2.67 g/mL, 2.68 g/mL, 2.70 g/mL, 2.71 g/mL, 2.73 g/mL, 2.74 g/mL, 2.75 g/mL, or 2.76 g/mL.

The specific surface area of the lithium supplement can be 3.47 m²/g, 3.48m²/g, 3.49m²/g, 3.50 m²/g, 3.52 m²/g, 3.54 m²/g, 3.57 m²/g, 3.58 m²/g, 3.59 m²/g, 3.60 m²/g, 3.63 m²/g, 3.65 m²/g, 3.68 m²/g, 3.67 m²/g, 3.68 m²/g, 3.71 m²/g, 3.72 m²/g, 3.73 m²/g, 3.75 m²/g, 3.78 m²/g, 3.82 m²/g, 3.85 m²/g, 3.88 m²/g, 3.89 m²/g, 3.92 m²/g, 3.94 m²/g, 3.96 m²/g, 3.97 m²/g, 4.01 m²/g, 4.02 m²/g, 4.05 m²/g, 4.08 m²/g, 4.09 m²/g, 4.13 m²/g, 4.15 m²/g, 4.18 m²/g, 4.19 m²/g, 4.25 m²/g, 4.26 m²/g, 4.28 m²/g, 4.30 m²/g, 4.33 m²/g, 4.35 m²/g, 4.38 m²/g, 4.40 m²/g, 4.45 m²/g, 4.49 m²/g, 4.52 m²/g, 4.57 m²/g, 4.59 m²/g, 4.63 m²/g, 4.65 m²/g, 4.69 m²/g, 4.72 m²/g, 4.75 m²/g, 4.78 m²/g, or 4.79 m²/g.

The tap density and compacted density of the lithium supplement are controlled within the above ranges, which is conducive to effectively improving the energy density of the lithium supplement. The specific surface area of the lithium supplement is controlled within the above range, which is beneficial to allowing the lithium supplement to have an appropriate contact area with the electrolyte and other components when applied to a secondary battery, thereby fully exerting the lithium supplementation effect of the lithium supplement.

In some embodiments, a mass ratio of element iron in the lithium supplement is in a range from 3.47% to 5.49%; a mass ratio of element boron in the lithium supplement is in a range from 0.46% to 1.26%; a mass ratio of element lithium in the lithium supplement is in a range from 12.78% to 13.99%; a mass ratio of element phosphorus in the lithium supplement is in a range from 30.98% to 31.98%. For example, in the lithium supplement, the mass ratio of element iron can be 3.47%, 3.49%, 3.52%, 3.54%, 3.55%, 3.62%, 3.67%, 3.70%, 3.72%, 3.75%, 3.79%, 3.81%, 3.83%, 3.85%, 3.89%, 3.92%, 3.94%, 3.96%, 3.98%, 4.0%, 4.05%, 4.08%, 4.1%, 4.15%, 4.18%, 4.2%, 4.25%, 4.3%, 4.36%, 4.38%, 4.4%, 4.42%, 4.45%, 4.47%, 4.49%, 4.5%, 4.53%, 4.55%, 4.58%, 4.59%, 4.6%, 4.63%, 4.67%, 4.69%, 4.71%, 4.73%, 4.75%, 4.78%, 4.8%, 4.83%, 4.85%, 4.89%, 4.91%, 4.95%, 4.97%, 4.99%, 5.02%, 5.06%, 5.08%, 5.09%, 5.12%, 5.14%, 5.18%, 5.19%, 5.23%, 5.25%, 5.28%, 5.29%, 5.33%, 5.36%, 5.38%, 5.39%, 5.4%, 5.42%, 5.43%, 5.45%, 5.47%, or 5.49%, the mass ratio of element boron can be 0.46%, 0.5%, 0.51%, 0.53%, 0.55%, 0.58%, 0.6%, 0.61%, 0.63%, 0.64%, 0.67%, 0.69%, 0.7%, 0.75%, 0.79%, 0.82%, 0.86%, 0.89%, 0.93%, 0.95%, 0.96%, 0.98%, 1%, 1.1%, 1.15%, 1.16%, 1.19%, 1.22%, 1.25%, or 1.26%.

The coating layer of the lithium supplement has relatively high electrical conductivity, which is beneficial to improving the conductivity of the lithium supplement.

In some embodiments, a content of moisture in the lithium supplement is less than 205 ppm, and/or a content of chloride ions in the lithium supplement is less than 90 ppm, and/or a content of metaborate ions in the lithium supplement is less than 70 ppm, and/or a content of residual carbonate ions in the lithium supplement is less than 680 ppm. Furthermore, the content of moisture in the lithium supplement ranges from 101 ppm to 204 ppm; the content of chloride ions in the lithium supplement ranges from 17 ppm to 87 ppm; the content of metaborate ions in the lithium supplement ranges from 35 ppm to 69 ppm; the content of residual carbonate ions in the lithium supplement ranges from 512 ppm to 678 ppm. For example, the content of moisture in the lithium supplement can be 200 ppm, 190 ppm, 189 ppm, 185 ppm, 182 ppm, 180 ppm, 175 ppm, 172 ppm, 170 ppm, 168 ppm, 165 ppm, 160 ppm, 158 ppm, 155 ppm, 152 ppm, 149 ppm, 147 ppm, 145 ppm, 140 ppm, 135 ppm, 130 ppm, 128 ppm, 125 ppm, 123 ppm, 120 ppm, 115 ppm, 110 ppm, 108 ppm, 105 ppm, or 101 ppm; the content of chloride ions in the lithium supplement can be 80 ppm, 78 ppm, 75 ppm, 70 ppm, 60 ppm, 56 ppm, 52 ppm, 50 ppm, 45 ppm, 42 ppm, 40 ppm, 35 ppm, or 30 ppm; the content of metaborate ions in the lithium supplement can be 69 ppm, 65 ppm, 60 ppm, 50 ppm, 40 ppm, 32 ppm, 30 ppm, 29 ppm, 25 ppm, or 20 ppm; the content of residual carbonate ions in the lithium supplement can be 678 ppm, 675 ppm, 670 ppm, 663 ppm, 660 ppm, 658 ppm, 655 ppm, 650 ppm, 648 ppm, 643 ppm, 641 ppm, 639 ppm, 620 ppm, 610 ppm, 590 ppm, 569 ppm, 557 ppm, 520 ppm, 503 ppm, or 512 ppm.

By controlling the content of moisture, chloride ions, metaborate ions, and/or carbonate ions within the above ranges, the effect of moisture, chloride ions, metaborate ions, and/or carbonate ions on the lithium supplement can be minimized, improving the stability of the lithium supplement, reducing the formation of by-products, which is beneficial to improving the lithium supplementation effect and further enhances the capacity, safety, and stability of secondary batteries adopting the lithium supplement.

In some embodiments, the powder resistivity of the lithium supplement is less than 1.0 Ω·cm. Further, the powder resistivity of the lithium supplement can range from 0.3 Ω·cm to 0.9 Ω·cm. For example, the powder resistivity of the lithium supplement can be 0.9 Ω·cm, 0.7 Ω·cm, 0.67 Ω·cm, 0.5 Ω·cm, 0.4 Ω·cm, or 0.3 Ω·cm.

The lithium supplement exhibits excellent conductivity. When applied to the cathode plate, the lithium supplement not only has a lithium supplementation effect, but also functions as a conducting agent, thereby improving the performance of secondary batteries.

In some embodiments, under conditions of 25°C and humidity of 8%, an initial charge specific capacity of the lithium supplement at a current rate of 0.05 C is in a range from 512 mAh/g to 518 mAh/g, preferably , in a range from 514 mAh/g to 518 mAh/g; under the conditions of 25°C and humidity of 8%, an initial discharge specific capacity of the lithium supplement at a current rate of 0.05 C is in a range from 86.1 mAh/g to 89.5 mAh/g.

For example, under the conditions of 25°C and humidity of 8%, the initial charge specific capacity of the lithium supplement at the current rate of 0.05 C can be 513 mAh/g, 514 mAh/g, 516 mAh/g, or 518 mAh/g, and the initial discharge specific capacity of the lithium supplement at the current rate of 0.05 C can be 87 mAh/g, 89 mAh/g, or 89.5 mAh/g.

The lithium supplement exhibits high initial charge specific capacity and the initial discharge specific capacity, indicating a significant lithium supplementation effect.

In some embodiments, when the lithium supplement exhibits good stability when applied to a cathode plate of a secondary battery. Specifically, after being placed in air at 25°C and humidity of 70% for 1 hour, the initial charge specific capacity of the lithium supplement at the current rate of 0.05 C ranges from 507 mAh/g to 510.1 mAh/g, preferably from 509 mAh/g to 510.1 mAh/g, and the initial discharge specific capacity of the lithium supplement at the current rate of 0.05 C ranges from 82.6 mAh/g to 86.7 mAh/g.

After being placed in air at 25°C and humidity of 70% for 4 hours, the initial charge specific capacity of the lithium supplement at the current rate of 0.05 C ranges from 504 mAh/g to 505 mAh/g, and the initial discharge specific capacity of the lithium supplement at the current rate of 0.05 C ranges from 80 mAh/g to 83.2 mAh/g.

After being placed in air at 25°C and humidity of 70% for 24 hours, the initial charge specific capacity of the lithium supplement at the current rate of 0.05 C ranges from 500 mAh/g to 502 mAh/g, and the initial discharge specific capacity of the lithium supplement at the current rate of 0.05 C ranges from 77 mAh/g to 81.5 mAh/g.

After being placed in air at 25°C and humidity of 70% for 48 hours, the initial charge specific capacity of the lithium supplement at the current rate of 0.05 C ranges from 488 mAh/g to 501.2 mAh/g, and the initial discharge specific capacity of the lithium supplement at the current rate of 0.05 C ranges from 75 mAh/g to 81.3 mAh/g.

For example, after being placed in air at 25°C and humidity of 70% for 1 hour, the initial charge specific capacity of the lithium supplement at the current rate of 0.05 C can be 508 mAh/g, 509 mAh/g, or 510.1 mAh/g, etc; after being placed in air at 25°C and humidity of 70% for 1 hour, the initial discharge specific capacity of the lithium supplement at the current rate of 0.05 C can be 83 mAh/g, 84 mAh/g, 85 mAh/g, or 86 mAh/g, etc.

For example, after being placed in air at 25°C and humidity of 70% for 4 hours, the initial charge specific capacity of the lithium supplement at the current rate of 0.05 C can be 504.5 mAh/g, or 504.8 mAh/g, etc; after being placed in air at 25°C and humidity of 70% for 4 hours, the initial discharge specific capacity of the lithium supplement at the current rate of 0.05 C can be 81 mAh/g, 82 mAh/g, 82.5 mAh/g, or 83.2 mAh/g, etc.

For example, after being placed in air at 25°C and humidity of 70% for 24 hours, the initial charge specific capacity of the lithium supplement at the current rate of 0.05 C can be 500.5 mAh/g, 501 mAh/g, 501.5 mAh/g, or 502 mAh/g, etc; after being placed in air at 25°C and humidity of 70% for 24 hours, the initial discharge specific capacity of the lithium supplement at the current rate of 0.05 C can be 77.5 mAh/g, 79 mAh/g, or 81 mAh/g, etc.

For example, after being placed in air at 25°C and humidity of 70% for 48 hours, the initial charge specific capacity of the lithium supplement at the current rate of 0.05 C can be 490 mAh/g, 491 mAh/g, 492 mAh/g, 493 mAh/g, 494 mAh/g, 495 mAh/g, 498 mAh/g, or 501.2 mAh/g, etc; after being placed in air at 25°C and humidity of 70% for 48 hours, the initial discharge specific capacity of the lithium supplement at the current rate of 0.05 C can be 75.1 mAh/g, 76 mAh/g, 77 mAh/g, 79 mAh/g, 80.7 mAh/g, or 81 mAh/g, etc.

In some embodiments, the above initial charge specific capacity and the initial discharge specific capacity are measured in button cells assembled with cathode plates containing the lithium supplement.

In some embodiments, the cathode plate includes a cathode active material, a binder, and a conducting agent. The cathode active material is the above-described lithium supplement. The binder is preferably polyvinylidene fluoride (PVDF), and other suitable binders for cathode plates can also be used. The conducting agent is preferably a carbonaceous material, such as conductive carbon black (SP), etc. The cathode active material, binder, and conducting agent are mixed in an appropriate mass ratio, and an aluminum foil is used as a current collector to prepare the cathode plate. The mass ratio of the cathode active material, binder, and conducting agent can be 85:8:7.

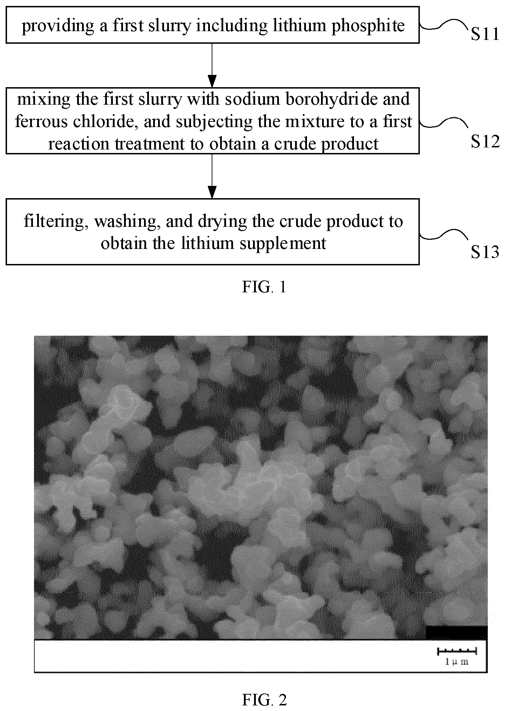

In a second aspect, an embodiment of the present application provides a method for preparing a lithium supplement, as shown in FIG. 1, which includes the following steps:
S11, providing a first slurry including lithium phosphite;
S12, mixing the first slurry with sodium borohydride and ferrous chloride, and subjecting the mixture to a first reaction treatment to obtain a crude product; and
S13, filtering, washing, and drying the crude product to obtain the lithium supplement,
wherein the lithium supplement includes lithium phosphite and a coating layer coating the lithium phosphite, and a material of the coating layer includes iron boride.

The preparation method provided in the present embodiment can be used to prepare the lithium supplement as described above.

In some embodiments, lithium phosphite can be obtained commercially or synthesized independently, which is not specifically limited herein.

After preparing the first slurry, the first slurry is mixed with sodium borohydride and ferrous chloride, and sodium borohydride reacts with ferrous chloride to form iron boride according to the reaction equation in Formula (4), thus forming the coating layer coated on the lithium phosphite, and the material of the coating layer is iron boride. This preparation method is simple, the raw materials are easily available, and compared to the lithium supplementing materials with high lithium contents in related art, the raw materials for the present lithium supplement are inexpensive, resulting in a lower cost.

NaBH₄+FeCl₂→ FeB+NaCl+H₂+HCl Formula (4)

In some embodiments, the step S11 of providing the first slurry including lithium phosphite includes:
obtaining a first solution of phosphorous acid, wherein a solvent in the first solution includes at least one of methanol, ethanol, glycerol, propanol, or propylene glycol;
adding a lithium salt to the first solution of phosphorous acid, and subjecting to a second reaction treatment to obtain a first reaction slurry;
grinding the first reaction slurry until the lithium phosphite in the first reaction slurry reaches a preset particle size, thereby obtaining the first slurry.

By adding the lithium salt to the first solution of phosphorous acid and performing the second reaction treatment, lithium phosphite crystallizes and precipitates from the first solution due to its low solubility in the above-described solvent, thereby obtaining the first reaction slurry. Subsequently, by grinding the first reaction slurry, the lithium phosphite within the first reaction slurry is ground to a preset particle size, thereby obtaining the first slurry. In this case, the first slurry is maintained to be acidic by using phosphorous acid as the raw material, which, in the subsequent first reaction treatment, ensures that the first reaction treatment occurs under an acidic condition. This is beneficial for the generation of iron boride, which is chemically plated onto the surface of lithium phosphite, thereby forming the coating layer.

In some embodiments, a molar ratio of phosphorous acid, sodium borohydride, and ferrous chloride is 1: (0.05 to 0.1): (0.025 to 0.05). By controlling the molar ratio of sodium borohydride and ferrous chloride within the above range, the first reaction treatment can be carried out under an acidic condition with an excess of sodium borohydride, which facilitates the reaction between sodium borohydride and ferrous chloride and promotes the formation of a suitable thickness of coating layer on the lithium phosphite.

For example, the molar ratio of phosphorous acid, sodium borohydride, and ferrous chloride can be 1:0.05:0.025, 1:0.07:0.025, 1:0.08:0.025, 1:0.08:0.025, 1:0.09:0.025, 1:0.1:0.025, 1:0.05:0.03, 1:0.05:0.04, 1:0.05:0.05, 1:0.06:0.03, 1:0.07:0.03, 1:0.08:0.03, 1:0.1:0.03, 1:0.06:0.04, 1:0.06:0.05, 1:0.07:0.04, 1:0.07:0.05, 1:0.08:0.04, 1:0.08:0.05, 1:0.09:0.04, 1:0.09:0.05, 1:0.1:0.04, or 1:0.1:0.05, etc.

In some embodiments, a temperature of the second reaction treatment is in a range from between 35°C to 55°C, and a duration of the second reaction treatment is in a range from 0.5 hours to 1 hour. By controlling the temperature and duration of the second reaction treatment within above ranges, the reaction between the lithium salt and phosphorous acid to generate lithium phosphite can proceed thoroughly.

For example, the temperature of the second reaction treatment can be 35°C, 38°C, 39°C, 40°C, 42°C, 45°C, 46°C, 48°C, 50°C, 52°C, 53°C, or 55°C, etc., and the duration of the second reaction treatment can be 0.5 hours, 0.7 hours, 0.8 hours, 0.9 hours, or 1 hour, etc.

In some embodiments, the lithium salt includes at least one of lithium carbonate, lithium sulfite, or lithium bicarbonate. These lithium salts can react with phosphorous acid to generate lithium phosphite and gases, thus reducing impurity introduction during the preparation of lithium phosphite.

Lithium carbonate and lithium sulfite can be introduced in solid form, and lithium bicarbonate can be introduced in solution form.

In some embodiments, the preset particle size is in a range from 0.3 µm to 3 µm. The preset particle size can be the D50 particle size of lithium phosphite, ranging from 0.3 µm to 3 µm, which facilitates formation of lithium phosphite with a concentrated particle size distribution and a relatively small particle size, which is beneficial for coating with the coating layer and for obtaining a lithium supplement with a concentrated particle size distribution and a relatively small particle size.

For example, the preset particle size can be 0.5 µm, 1 µm, 1.2 µm, 1.5 µm, 1.8 µm, 2 µm, 2.1 µm, 2.2 µm, 2.5 µm, 2.8 µm, etc.

In some embodiments, the lithium salt is selected from lithium carbonate. When the lithium salt is lithium carbonate, the gas produced from the reaction between lithium carbonate and phosphorous acid is carbon dioxide, which is less irritating than sulfur dioxide as a produced gas.

In some embodiments, a molar ratio of lithium in the lithium salt to phosphorous acid is in a range from 1.8:1 to 1.9:1, ensuring that phosphorous acid is slightly excessive, which can maintain an acidic condition for the first reaction treatment, thereby forming iron boride.

For example, the molar ratio of lithium in the lithium salt to phosphorous acid can be 1.8:1, 1.82:1, 1.84:1, 1.86:1, 1.88:1, or 1.9:1, etc.

When the lithium salt is at least one selected from lithium carbonate and lithium sulfite, a molar ratio of the lithium salt to phosphorous acid is in a range from 0.9:1 to 0.95:1.

In some embodiments, when the solvent in the first solution is methanol, the first solution of phosphorous acid can be a methanol solution of phosphorous acid.

In some embodiments, the step of obtaining the first reaction slurry can be:
adding the lithium salt to the first solution of phosphorous acid under a stirring condition and reacting at a temperature of 35°C to 55°C for 0.5 hours to 1 hour, until no bubbles are produced, indicating a completion of the reaction thereby obtaining the first reaction slurry. The reaction equation is according to Formula (5).

H₃PO₃+Li₂CO₃→Li₂HPO₃+H₂O+CO₂↑ Formula (5)

In some embodiments, a mass percentage of phosphorous acid in the first solution of phosphorous acid can be in a range from 5% to 10%. For example, a concentration of phosphorous acid in the first solution can be 5%, 6%, 7%, 8%, 9%, or 10%, etc.

In some embodiments, the first reaction slurry can be ground in a ball mill, so as to obtain the first slurry containing lithium phosphite with the preset particle size.

In some embodiments, ceramic balls can be added in the ball mill grinding the first reaction slurry. A diameter of the ceramic balls can be in a range from 0.3 mm to 0.8 mm.

In some embodiments, the step S12 of mixing the first slurry with sodium borohydride and ferrous chloride, and subjecting the mixture to a first reaction treatment to obtain the crude product includes:
mixing a solution containing sodium borohydride, a solution containing ferrous chloride, and the first slurry, and then holding for a first preset time at a first reaction temperature to obtain the crude product.

In these embodiments, by mixing the solution containing sodium borohydride, the solution containing ferrous chloride, and the first slurry, the product formed by the reaction between sodium borohydride and ferrous chloride can uniformly coat the lithium phosphite, which improves the coating uniformity of the coating layer.

In some embodiments, the mixing can be carried out under first stirring, with a stirring speed ranging from 100 r/min to 300 r/min, in order to enhance the uniformity of the mixture of the first slurry with the solution containing sodium borohydride and the solution containing ferrous chloride.

In some embodiments, the mixing can be carried out at a temperature in a range from 25°C to 45°C, e.g., 26°C, 30°C, 35°C, or 40°C, etc.

In some embodiments, the mixing can be carried out for a time period in a range from 60 minutes to 120 minutes to ensure thorough mixing of the first slurry with the solution containing sodium borohydride and the solution containing ferrous chloride.

In some embodiments, mixing the solution containing sodium borohydride, the solution containing ferrous chloride, and the first slurry can be: firstly mixing the solution containing sodium borohydride with the solution containing ferrous chloride, and introducing the mixed solution into the first slurry to mix with the first slurry, or can be: introducing the solution containing sodium borohydride and the solution containing ferrous chloride into the first slurry to together mix with the first slurry. It should be noted that when the solution containing sodium borohydride and the solution containing ferrous chloride are firstly mixed and then introduced into the first slurry to mix with the first slurry, the time period and temperature of the mixing and the speed of the first stirring are the time period and stirring speed of mixing the mixed solution containing sodium borohydride and ferrous chloride with the first slurry.

In some embodiments, a mass percentage of sodium borohydride in the solution containing sodium borohydride can be in a range from 3% to 8%, and a mass percentage of ferrous chloride in the solution containing ferrous chloride can be in a range from 5% to 10%. For example, the mass percentage of sodium borohydride in the solution containing sodium borohydride can be 3%, 4%, 5%, 6%, 7%, or 8%, etc., and the mass percentage of ferrous chloride in the solution containing ferrous chloride can be 5%, 6%, 7%, 8%, 9%, or 10%, etc.

In some embodiments, the first reaction temperature can be in a range from 25°C to 45°C, e.g., can be 26°C, 30°C, 35°C, 40°C, etc.

In these embodiments, the first reaction temperature is controlled within the range from 25°C to 45°C, which facilitates sufficient formation of iron boride, promoting the formation of the coating layer with appropriate thickness and coverage ratio on the surface of lithium phosphite.

In some embodiments, the temperature of the mixing and the first reaction temperature can be the same.

In some embodiments, the first preset time can be in a range from 30 minutes to 60 minutes, e.g., can be 35 minutes, 40 minutes, 45 minutes, 50 minutes, 55 minutes, etc., which facilitates sufficient formation of iron boride, improving the coverage ratio by the coating layer on the surface of lithium phosphite.

Furthermore, the solvent in the solution containing sodium borohydride and the solvent in the solution containing ferrous chloride can be independently selected from methanol, ethanol, glycerol, propanol, and propylene glycol, and can be the same as the solvent in the first solution.

For example, when the first solution of lithium phosphite is a methanol solution, the solution containing sodium borohydride can be a methanol solution of sodium borohydride, and the solution containing ferrous chloride can be a methanol solution of ferrous chloride.

In some embodiments, after mixing the solution containing sodium borohydride, the solution containing ferrous chloride, and the first slurry, a second stirring can be carried out at the first reaction temperature for the first preset time, which is beneficial to complete reaction of sodium borohydride and ferrous chloride.

In some embodiments, the stirring speed of the second stirring can be in a range from 100 r/min to 300 r/min.

In some embodiments, the stirring speeds of the first stirring and the second stirring can be the same.

In some embodiments, in step S13, the coating layer coated lithium phosphite can be washed with the solvent same as that in the first solution. The mother liquors of washing and filtering can be distilled and recovered for reuse.

For example, when the solvent in the first solution is methanol, the lithium phosphite coated with the coating layer can be washed with methanol, which facilitates reducing residual moisture in the coated lithium phosphite during the washing process, thereby minimizing the introduction of moisture into the lithium supplement.

In some embodiments, the drying is performed under vacuum, that is, the drying can be vacuum drying. The drying can be performed at a vacuum degree in a range from -0.09 MPa to -0.07 MPa and a temperature in a range from 80°C to 100°C, which facilitates effective removal of moisture, reducing residual moisture. For example, the vacuum degree of the drying can be -0.09 MPa, -0.08 MPa, or -0.07 MPa, and the temperature of the drying can be 80°C, 85°C, 90°C, 95°C, or 100°C.

In some embodiments, when the drying is performed under vacuum, the gas in the vacuum chamber can be firstly displaced with a protective gas to reduce the oxygen content in the vacuum chamber to below 500 ppm, after which the vacuum chamber can be vacuumed to reach the vacuum degree of -0.09 MPa to -0.07 MPa. This process facilitates further reducing the oxygen content during the drying, which further improves the material stability of the lithium supplement and reduces the generation of by-products such as lithium phosphate.

For example, the protective gas can include nitrogen gas, argon gas, and/or helium gas, etc.

In some embodiments, the drying can be terminated when the moisture content is below 0.1% by mass, which can reduce the moisture in the lithium supplement, thereby improving the stability of the lithium supplement.

In some embodiments, the preparation method can further include: screening, electromagnetically removing iron, and packaging after the drying, to obtain the lithium supplement with a particle size and an impurity content that meet the needs, ensuring effective lithium supplementation.

In a third aspect, an embodiment of the present application provides a cathode plate, including a current collector and a cathode material disposed on at least one side of the current collector along a thickness direction of the current collector. The cathode material includes the lithium supplement as described in the first aspect.

In the cathode plate of the present embodiment, the cathode plate includes the above-described lithium supplement, and the lithium supplement includes an iron boride coating layer coated on the lithium phosphite, thereby improving safety, stability, electrical conductivity, and lithium supplementation effect while being cost-effective. As a result, the safety, stability, electrical conductivity, and lithium supplementation effect of the cathode plate are improved, the cost of the cathode plate is reduced, and the capacity of the battery using the cathode plate can be improved.

In a fourth aspect, an embodiment of the present application provides a secondary battery, including a cathode plate, an anode plate, and a separator;

wherein the cathode plate is the cathode plate described in the third aspect.

In the secondary battery provided in the present embodiment, since including the above-described cathode plate, the secondary battery has improved safety, stability, and capacity and reduced manufacturing costs.

In a fifth aspect, an embodiment of the present application provides an electrical device, which includes a plurality of batteries connected in series and/or parallel, and at least one of the batteries is the secondary battery as described in the fourth aspect.

In the electrical device provided in the present embodiment, since the secondary battery has good stability and safety, low cost, effective lithium supplementation, thus having high capacity, the electrical device exhibits excellent stability and safety as well as reduced manufacturing costs.

The electrical devices provided in the embodiment of the present application can include, but are not limited to, smartphones, tablets, laptops, electric toys, power tools, electric bicycles, electric vehicles, ships, and spacecraft, etc. The electric toys can include stationary or mobile electric toys, such as gaming consoles, electric toy cars, electric toy boats, and electric toy airplanes, etc. The spacecraft can include aircraft, rockets, space shuttles, and spaceships, etc.

The embodiments of the present disclosure will be described in detail below. It should be understood that the embodiments described below are exemplary, and are only intended to explain the present disclosure rather than being construed as limitation to the present disclosure. Where specific techniques or conditions are not indicated in the examples, the procedures shall be carried out in accordance with the techniques or conditions described in the literatures in the field or in accordance with the product specification. The reagents or instruments for which no manufacturers are noted are all common products commercially available from the market.

### Example 1

The method for preparing the lithium supplement in Example 1 is as follows:

Phosphorous acid was added to methanol to obtain a clear methanol solution (i.e., the first solution) with a concentration of 8% by mass of phosphorous acid. Under a stirring condition, lithium carbonate (the lithium salt) was added to the first solution. The molar ratio of lithium salt to phosphorous acid was 0.93:1. The reaction was carried out at 45°C for 1 hour until no gas bubbles were generating to obtain the first reaction slurry. The first reaction slurry was placed in a ball mill and ground with ceramic balls having a diameter of 0.6 mm. The grinding was performed until the particle size of lithium phosphite reached 2.12 µm (i.e., the preset particle size), thereby obtaining the first slurry. With methanol as the solvent, the solution containing sodium borohydride and the solution containing ferrous chloride were prepared. The mass concentration of sodium borohydride in the solution containing sodium borohydride was 6%. The mass concentration of ferrous chloride in the solution containing ferrous chloride was 8%. The solution containing sodium borohydride and the solution containing ferrous chloride were pumped into the first slurry using a peristaltic pump for mixing. The molar ratio of phosphorous acid, sodium borohydride, and ferrous chloride that were mixed was 1:0.08:0.038. The mixing was carried out at 35°C and a stirring speed of 200 rpm for 90 minutes. After the mixing, the mixture was further stirred at 35°C and the stirring speed of 200 rpm for an additional 50 minutes to complete the reaction, thereby obtaining the crude product. The crude product was filtered, washed, and dried, and the obtained material was sieved, subjected to electromagnetic iron removal, and vacuum packaged to obtain iron boride coated lithium phosphite (the lithium supplement). The washing was carried out with methanol, and the methanol after the washing and the filtrate were distilled to recycle methanol for reuse. During drying of the washed material, nitrogen gas was first introduced into a vacuum drying oven to reduce the oxygen content in the vacuum drying oven to below 500 ppm. The vacuum drying oven was then vacuumed. The drying was carried out at 90°C and a vacuum degree of -0.085 MPa. The drying continued until the moisture content of the material was less than 0.1% by mass, after which the material was cooled to 40°C. The cooled material was then sieved, subjected to electromagnetic iron removal, and vacuum packaged.

The results obtained by testing the finally obtained lithium supplement is shown in Table 1:

**Table 1**

| Index | Li | P | Fe | B | BET | Tap density |
|---|---|---|---|---|---|---|
| Result | 13.42% | 31.21% | 4.59% | 0.92% | 3.73 m²/g | 1.55 g/mL |
| Compacted density | Moisture | Na | K | Ca | Mg | Ni |
| 2.73 g/mL | 125 ppm | 65.3 ppm | 12.4 ppm | 16.8 ppm | 19.4 ppm | 2.5 ppm |
| Cr | Cu | Zn | Chloride ions | Metaborate ions | Powder resistivity | CO₃²⁻ |
| 0.2 ppm | 0.1 ppm | 0.3 ppm | 17 ppm | 37 ppm | 0.5Ω.cm | 569 ppm |
| Sphericity | | | | | | |
| 0.87 | | | | | | |

### Example 2

The method for preparing the lithium supplement in Example 2 is as follows:
Phosphorous acid was added to methanol to obtain a clear methanol solution (i.e., the first solution) with a concentration of 5% by mass of phosphorous acid. Under a stirring condition, lithium carbonate (the lithium salt) was added to the first solution. The molar ratio of lithium salt to phosphorous acid was 0.90:1. The reaction was carried out at 35°C for 0.8 hours until no gas bubbles were generating to obtain the first reaction slurry. The first reaction slurry was placed in a ball mill and ground with ceramic balls having a diameter of 0.3 mm. The grinding was performed until the particle size of lithium phosphite reached 3 µm (i.e., the preset particle size), thereby obtaining the first slurry. With methanol as the solvent, the solution containing sodium borohydride and the solution containing ferrous chloride were prepared. The mass concentration of sodium borohydride in the solution containing sodium borohydride was 8%. The mass concentration of ferrous chloride in the solution containing ferrous chloride was 3%. The solution containing sodium borohydride and the solution containing ferrous chloride were pumped into the first slurry using a peristaltic pump for mixing. The molar ratio of phosphorous acid, sodium borohydride, and ferrous chloride that were mixed was 1:0.1:0.025. The mixing was carried out at 25°C and a stirring speed of 300 rpm for 60 minutes. After the mixing, the mixture was further stirred at 25°C and the stirring speed of 300 rpm for an additional 30 minutes to complete the reaction, thereby obtaining the crude product. The crude product was filtered, washed, and dried, and the obtained material was sieved, subjected to electromagnetic iron removal, and vacuum packaged to obtain iron boride coated lithium phosphite (the lithium supplement). The washing was carried out with methanol, and the methanol after the washing and the filtrate were distilled to recycle methanol for reuse. During drying of the washed material, nitrogen gas was first introduced into a vacuum drying oven to reduce the oxygen content in the vacuum drying oven to below 500 ppm. The vacuum drying oven was then vacuumed. The drying was carried out at 80°C and a vacuum degree of -0.07 MPa. The drying continued until the moisture content of the material was less than 0.1% by mass, after which the material was cooled to 40°C. The cooled material was then sieved, subjected to electromagnetic iron removal, and vacuum packaged.

The results obtained by testing the finally obtained lithium supplement is shown in Table 2:

**Table 2**

| Index | Li | P | Fe | B | BET | Tap density |
|---|---|---|---|---|---|---|
| Result | 12.78% | 31.98% | 4.01% | 1.26% | 3.58 m²/g | 1.59 g/mL |
| Compacted density | Moisture | Na | K | Ca | Mg | Ni |
| 2.71 g/mL | 168 ppm | 69.7 ppm | 10.2 ppm | 12.9 ppm | 21.6 ppm | 2.1 ppm |
| Cr | Cu | Zn | Chloride ions | Metaborate ions | Powder resistivity | CO₃²⁻ |
| 0.5 ppm | 0.1 ppm | 0.9 ppm | 28 ppm | 68 ppm | 0.9 Ω.cm | 512 ppm |
| Sphericity | | | | | | |
| 0.82 | | | | | | |

### Example 3

The method for preparing the lithium supplement in Example 3 is as follows:
Phosphorous acid was added to methanol to obtain a clear methanol solution (i.e., the first solution) with a concentration of 10% by mass of phosphorous acid. Under a stirring condition, lithium carbonate (the lithium salt) was added to the first solution. The molar ratio of lithium salt to phosphite ions was 0.95:1. The reaction was carried out at 55°C for 0.5 hours until no gas bubbles were generating to obtain the first reaction slurry. The first reaction slurry was placed in a ball mill and ground with ceramic balls having a diameter of 0.8 mm. The grinding was performed until the particle size of lithium phosphite reached 0.3 µm (i.e., the preset particle size), thereby obtaining the first slurry. With methanol as the solvent, the solution containing sodium borohydride and the solution containing ferrous chloride were prepared. The mass concentration of sodium borohydride in the solution containing sodium borohydride was 3%. The mass concentration of ferrous chloride in the solution containing ferrous chloride was 5%. The solution containing sodium borohydride and the solution containing ferrous chloride were pumped into the first slurry using a peristaltic pump for mixing. The molar ratio of phosphorous acid, sodium borohydride, and ferrous chloride that were mixed was 1:0.05:0.05. The mixing was carried out at 45°C and a stirring speed of 100 rpm for 120 minutes. After the mixing, the mixture was further stirred at 45°C and the stirring speed of 200 rpm for an additional 60 minutes to complete the reaction, thereby obtaining the crude product. The crude product was filtered, washed, and dried, and the obtained material was sieved, subjected to electromagnetic iron removal, and vacuum packaged to obtain iron boride coated lithium phosphite (the lithium supplement). The washing was carried out with methanol, and the methanol after the washing and the filtrate were distilled to recycle methanol for reuse. During drying of the washed material, nitrogen gas was first introduced into a vacuum drying oven to reduce the oxygen content in the vacuum drying oven to below 500 ppm. The vacuum drying oven was then vacuumed. The drying was carried out at 100°C and a vacuum degree of -0.09 MPa. The drying continued until the moisture content of the material was less than 0.1% by mass, after which the material was cooled to 40°C. The cooled material was then sieved, subjected to electromagnetic iron removal, and vacuum packaged.

The results obtained by testing the finally obtained lithium supplement is shown in Table 3:

**Table 3**

| Index | Li | P | Fe | B | BET | Tap density |
|---|---|---|---|---|---|---|
| Result | 13.99% | 30.98% | 5.03% | 0.84% | 3.98 m²/g | 1.51 g/mL |
| Compacted density | Moisture | Na | K | Ca | Mg | Ni |
| 2.61 g/mL | 111 ppm | 60.5 ppm | 14.6 ppm | 19.5 ppm | 21.5 ppm | 2.9 ppm |
| Cr | Cu | Zn | Chloride ions | Metaborate ions | Powder resistivity | CO₃²⁻ |
| 0.2 ppm | 0.2 ppm | 0.3 ppm | 38 ppm | 58 ppm | 0.6 Ω.cm | 513 ppm |
| Sphericity | | | | | | |
| 0.84 | | | | | | |

### Example 4

The method for preparing the lithium supplement provided in Example 4 is substantially the same as the method in Example 1, and the difference is in that:
the grinding was carried out until the particle size of the lithium phosphite (the preset particle size) reached 0.1 µm.

The results obtained by testing the finally obtained lithium supplement is shown in Table 4:

**Table 4**

| Index | Li | P | Fe | B | BET | Tap density |
|---|---|---|---|---|---|---|
| Result | 13.44% | 31.17% | 4.58% | 0.91% | 4.79 m²/g | 1.43 g/mL |
| Compacted density | Moisture | Na | K | Ca | Mg | Ni |
| 2.48 g/mL | 204 ppm | 67.9 ppm | 12.9 ppm | 17.4 ppm | 21.1 ppm | 2.9 ppm |
| Cr | Cu | Zn | Chloride ions | Metaborate ions | Powder resistivity | CO₃²⁻ |
| 0.2 ppm | 0.2 ppm | 0.6 ppm | 87 ppm | 35 ppm | 0.67 Ω.cm | 557 ppm |
| Sphericity | | | | | | |
| 0.81 | | | | | | |

### Example 5

The method for preparing the lithium supplement provided in Example 5 is substantially the same as the method in Example 1, and the difference is in that:
the grinding was carried out until the particle size of the lithium phosphite (i.e., the preset particle size) reached 3.5 µm.

The results obtained by testing the finally obtained lithium supplement is shown in Table 5:

**Table 5**

| Index | Li | P | Fe | B | BET | Tap density |
|---|---|---|---|---|---|---|
| Result | 13.41% | 31.18% | 4.61% | 0.91% | 3.69 m²/g | 1.58 g/mL |
| Compacted density | Moisture | Na | K | Ca | Mg | Ni |
| 2.75 g/mL | 101 ppm | 63.6 ppm | 16.3 ppm | 16.1 ppm | 19.1 ppm | 2.1 ppm |
| Cr | Cu | Zn | Chloride ions | Metaborate ions | Powder resistivity | CO₃²⁻ |
| 0.2 ppm | 0.2 ppm | 0.4 ppm | 21 ppm | 41 ppm | 0.4 Ω.cm | 523 ppm |
| Sphericity | | | | | | |
| 0.86 | | | | | | |

### Example 6

The method for preparing the lithium supplement provided in Example 6 is substantially the same as the method in Example 1, and the difference is in that:
the solution containing sodium borohydride and the solution containing ferrous chloride were pumped into the first slurry using a peristaltic pump for mixing, and the molar ratio of phosphorous acid, sodium borohydride, and ferrous chloride that were mixed was 1:0.03:0.025.

The results obtained by testing the finally obtained lithium supplement is shown in Table 6:

**Table 6**

| Index | Li | P | Fe | B | BET | Tap density |
|---|---|---|---|---|---|---|
| Result | 13.69% | 31.49% | 3.87% | 0.49% | 3.70 m²/g | 1.52 g/mL |
| Compacted density | Moisture | Na | K | Ca | Mg | Ni |
| 2.70 g/mL | 169 ppm | 67.8 ppm | 18.6 ppm | 15.2 ppm | 17.9 ppm | 2.1 ppm |
| Cr | Cu | Zn | Chloride ions | Metaborate ions | Powder resistivity | CO₃²⁻ |
| 0.1 ppm | 0.2 ppm | 0.2 ppm | 25 ppm | 41 ppm | 0.7 Ω.cm | 613 ppm |
| Sphericity | | | | | | |
| 0.85 | | | | | | |

### Example 7

The method for preparing the lithium supplement provided in Example 7 is substantially the same as the method in Example 1, and the difference is in that:
the solution containing sodium borohydride and the solution containing ferrous chloride were pumped into the first slurry using a peristaltic pump for mixing, and the molar ratio of phosphorous acid, sodium borohydride, and ferrous chloride that were mixed was 1:0.1:0.06.

The results obtained by testing the finally obtained lithium supplement is shown in Table 7:

**Table 7**

| Index | Li | P | Fe | B | BET | Tap density |
|---|---|---|---|---|---|---|
| Result | 13.21% | 31.11% | 5.49% | 1.18% | 3.47 m²/g | 1.59 g/mL |

| Compacted density | Moisture | Na | K | Ca | Mg | Ni |
|---|---|---|---|---|---|---|
| 2.76 g/mL | 116 ppm | 69.6 ppm | 13.8 ppm | 15.4 ppm | 18.4 ppm | 2.2 ppm |
| Cr | Cu | Zn | Chloride ions | Metaborate ions | Powder resistivity | CO₃²⁻ |
| 0.2 ppm | 0.2 ppm | 0.4 ppm | 27 ppm | 69 ppm | 0.3 Ω.cm | 603 ppm |
| Sphericity | | | | | | |
| 0.84 | | | | | | |

### Example 8

The method for preparing the lithium supplement provided in Example 8 is substantially the same as the method in Example 1, and the difference is in that:
the solution containing sodium borohydride and the solution containing ferrous chloride were pumped into the first slurry using a peristaltic pump for mixing, and the molar ratio of phosphorous acid, sodium borohydride, and ferrous chloride that were mixed was 1:0.03:0.06.

The results obtained by testing the finally obtained lithium supplement is shown in Table 8:

**Table 8**

| Index | Li | P | Fe | B | BET | Tap density |
|---|---|---|---|---|---|---|
| Result | 13.61% | 31.44% | 5.45% | 0.46% | 3.65 m²/g | 1.51 g/mL |
| Compacted density | Moisture | Na | K | Ca | Mg | Ni |
| 2.71 g/mL | 127 ppm | 67.1 ppm | 18.1 ppm | 15.9 ppm | 17.1 ppm | 2.2 ppm |
| Cr | Cu | Zn | Chloride ions | Metaborate ions | Powder resistivity | CO₃²⁻ |
| 0.1 ppm | 0.2 ppm | 0.4 ppm | 31 ppm | 48 ppm | 0.4 Ω.cm | 678 ppm |
| Sphericity | | | | | | |
| 0.83 | | | | | | |

### Comparative Example 1

Comparative Example 1 provides a method for preparing a lithium-rich lithium iron oxide as a lithium supplement.
Iron oxide and lithium oxide were mixed in the molar ratio of iron to lithium being 1:5.25. The mixture was then calcined under nitrogen protection at 750°C for 6 hours. After cooling to 135°C, the material was conveyed to a crusher under nitrogen gas at humidity of 5%, and crushed under nitrogen protection with a dew point of -20°C, at 120°C and humidity of 2%, until the particle size reaches 2.7 µm, thereby obtaining the lithium-rich lithium iron oxide as the lithium supplement.

The results obtained by testing the finally obtained lithium supplement is shown in Table 9:

**Table 9**

| Index | Li | Fe | BET | Tap density | pH | Compacted density |
|---|---|---|---|---|---|---|
| Result | 23.14% | 35.45% | 7.56 m²/g | 1.86 g/mL | 11.78 | 3.2 g/mL |
| Thickness of coating layer | Coverage rate | | | | | |
| No coating layer | / | | | | | |

### Comparative Example 2

Comparative Example 2 provides a method for preparing a lithium supplement as follows:
Phosphorous acid was added to methanol to obtain a clear methanol solution (i.e., the first solution) with a concentration of 8% by mass of phosphorous acid. Under a stirring condition, lithium carbonate (the lithium salt) was added to the first solution. The molar ratio of lithium salt to phosphorous acid was 0.93:1. The reaction was carried out at 45°C for 1 hour until no gas bubbles were generating to obtain the first reaction slurry. The first reaction slurry was placed in a ball mill and ground with ceramic balls having a diameter of 0.6 mm. The grinding was performed until the particle size of lithium phosphite reached 2.12 µm (i.e., the preset particle size), thereby obtaining the first slurry. The first slurry was washed with methanol, and dried. During drying of the washed material, nitrogen gas was first introduced into a vacuum drying oven to reduce the oxygen content in the vacuum drying oven to below 500 ppm. The vacuum drying oven was then vacuumed. The drying was carried out at 90°C and a vacuum degree of -0.085 MPa. The drying continued until the moisture content of the material was less than 0.1% by mass, after which the material was cooled to 40°C. The cooled material was then sieved, subjected to electromagnetic iron removal, and vacuum packaged, thereby obtaining uncoated lithium phosphite (the lithium supplement).

### Testing Methods and Results

1. The morphology of the lithium supplement from Example 1 was characterized by scanning electron microscopy, and the result is shown in FIG. 2. It can be seen from FIG. 2 that the particle size distribution of the lithium supplement is relatively uniform, and the particles are spheroidal in shape.
2. Tests of chemical composition indexes and physical and chemical indexes of the lithium supplements:

The chemical composition indexes and physical and chemical indexes of the lithium supplements from Examples 1 to 8 and Comparative Example 1 were tested, and the specific test results are shown in Tables 1 to 9.

In the tests of chemical composition indexes, the Fe content was measured using potentiometric titration; the P content was determined using the quinoline phosphomolybdate gravimetric method; the contents of lithium, sodium, potassium, calcium, magnesium, chromium, copper, and zinc were measured by inductively coupled plasma atomic emission spectroscopy (ICP-AES); the content of chloride ions was measured using potentiometric titration; the content of metaborate ions was determined by titration; the content of carbonate ions was measured using potentiometric titration.

In the tests of physical and chemical indexes, the moisture content of the lithium supplement was determined using the Karl Fischer (KF) method; the specific surface area of the lithium supplement was measured using the Brunauer-Emmett-Teller (BET) method (e.g., the nitrogen adsorption multi-point BET method); the powder resistivity was measured using the four-probe method at a pressure of 10 MPa. Sphericity directly affects flowability and packing performance. The sphericity of the lithium supplement was measured using a combined method of microscopic measurement and image processing technology. Particle size and shape information of each particle were obtained through particle image processing and analysis using image analysis software, and then statistically analyzed to obtain the particle size (D50), particle size distribution, average length and diameter, aspect ratio distribution, average circularity, circularity distribution, etc. The average circularity was used to represent the sphericity of the lithium supplement.

The tap density was measured using a tap density tester with 5000 taps.

The compacted density was measured using a compacted density tester, with a pressure of 3T and a compaction time of 30 seconds.

Based on the test results shown in Tables 1 to 9, it can be known that the lithium supplements from Examples 1 to 8 all contain iron and boron elements. The iron content ranges from 3.47% to 5.49% by weight, and the boron content ranges from 0.46% to 1.26% by weight, indicating that an iron boride coating layer has been formed on the surface of the lithium phosphite in the lithium supplements from Examples 1 to 8.

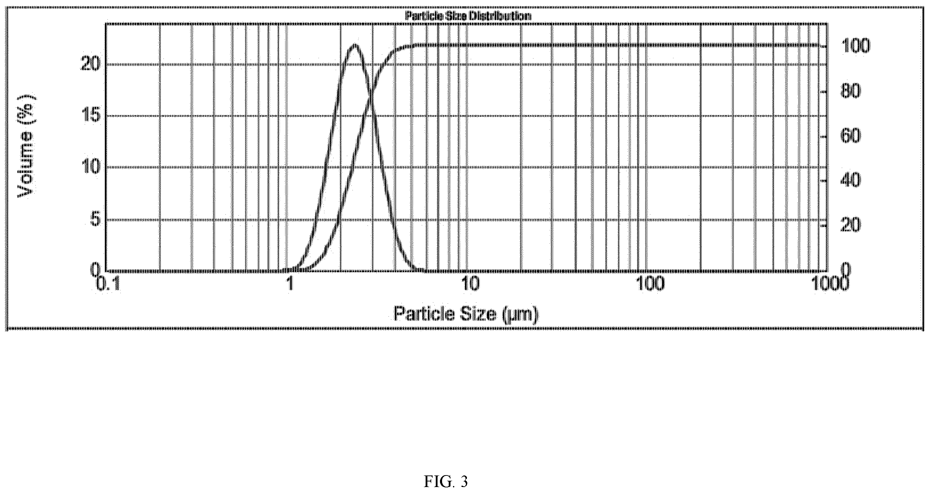

3. The particle size distribution of the lithium supplements from Examples 1 to 8 and Comparative Examples 1 to 2 were tested using laser particle size analyzer. The particle size distribution curve for the lithium supplement from Example 1 is shown in FIG. 3, and the particle size distribution results of the lithium supplements from Examples 1 to 8 and Comparative Examples 1 to 2 are shown in Table 10.

The thickness of the coating layer was measured using transmission electron microscopy (TEM). The coverage ratio by the coating layer is defined as the percentage of the surface area of the particle (i.e., the lithium-rich lithium iron oxide core in Examples 1 to 10) covered by the coating layer in the total surface area of the particle. The coating amount of the coating layer was determined using diffuse reflectance infrared Fourier-transform spectroscopy. From the coating amount and the cross-sectional area of the coating layer (also referred to as the cross-sectional area), the coverage ratio was calculated using the formula $n = \frac{M}{q} {N}_{Λ} {a}_{0} / {S}_{w}$, where n represents the coverage ratio, M represents the coating amount, q represents the molecular weight of the material of the coating layer, NA represents Avogadro's constant (6.023×10²³), a0 represents the cross-sectional area of the coating layer, and S_{w} represents the specific surface area of the particle. The thickness of the coating layer and the coverage ratio in Examples 1 to 8 are shown in Table 10.

**Table 10**

| Group | D10 particle size (µm) | D10 particle size (µm) | D90 particle size (µm) | Thickness of coating layer /µm | Coverage ratio /% |
|---|---|---|---|---|---|
| Example 1 | 2.4 | 1.7 | 3.4 | 1.43 | 98.9 |
| Example 2 | 3.4 | 1.9 | 5.9 | 1.98 | 98.5 |
| Example 3 | 0.6 | 0.2 | 1.7 | 1.03 | 98.1 |
| Example 4 | 0.3 | 0.1 | 1.3 | 1.05 | 94.1 |
| Example 5 | 3.8 | 1.9 | 6.4 | 1.08 | 93.8 |
| Example 6 | 2.4 | 1.7 | 3.4 | 0.67 | 93.1 |
| Example 7 | 3.7 | 1.3 | 5.8 | 1.68 | 94.8 |
| Example 8 | 2.7 | 1.5 | 3.9 | 0.63 | 94.3 |
| Comparative Example 1 | 2.7 | 1.6 | 9.5 | / | / |
| Comparative Example 2 | 2.3 | 1.5 | 3.2 | / | / |

In Table 10, the D50 particle size refers to the corresponding particle size when the cumulative volume distribution of the lithium supplement reaches 50%, the D10 particle size refers to the corresponding particle size when the cumulative volume distribution of the lithium supplement reaches 10%, the D90 particle size refers to the corresponding particle size when the cumulative volume distribution of the lithium supplement reaches 90%.

From Table 10, it can be seen that compared to the lithium supplements provided in Comparative Examples 1 and 2, those provided in Examples 1 to 8 have a more concentrated particle size distribution and smaller particle sizes, which are beneficial for effectively avoiding graininess during the electrode material coating process, enhancing the flatness of the electrode plate.

### 4. Tests of electrical performance indexes of the lithium supplements

(1) The lithium supplements provided in Examples 1 to 8 and Comparative Examples 1 to 2 were each used as a cathode active material and mixed with conductive carbon black (SP) and PVDF in a mass ratio of 85:7:8. NMP was then added to the mixture for homogenization. The resulting mixture was coated onto aluminum foil, dried, and then rolled to a compacted density of 2.1 g/mL. The electrolyte was a 1 mol/L lithium hexafluorophosphate solution, with the solvent consisting of ethylene carbonate (EC), ethyl methyl carbonate (EMC), and diethyl carbonate (DEC) in a volume ratio of 1:1:1. The anode was a lithium metal foil, and a button cell was assembled for the tests.

The initial charge specific capacity and the initial discharge specific capacity of the button cells assembled using the lithium supplements from Examples 1 to 8 were tested at a current rate of 0.05 C between 2.0 V and 4.0 V at 25°C and humidity of 8%. The initial charge specific capacity and the initial discharge specific capacity of the button cell assembled using the lithium supplement from Comparative Example 1 were tested at a current rate of 0.05 C respectively between 2.0 V and 4.5 V and between 2.0 V and 4.0 V. The initial charge specific capacity and the initial discharge specific capacity of the button cell assembled using the lithium supplement from Comparative Example 2 were tested at a current rate of 0.05 C between 2.0V and 4.0V. The results are shown in Table 11 below:

**Table 11**

| Group | 0.05C initial charge specific capacity (mAh/g) | 0.05C initial discharge specific capacity (mAh/g) |
|---|---|---|
| Example 1 | 518 | 89.5 |
| Example 2 | 516 | 88.6 |
| Example 3 | 515 | 88.7 |
| Example 4 | 514 | 86.1 |
| Example 5 | 513 | 87.2 |
| Example 6 | 512 | 86.3 |
| Example 7 | 515 | 87.2 |
| Example 8 | 513 | 86.1 |
| Comparative Example 1 (voltage between 2.0 V and 4.5 V) | 687 | 13.7 |
| Comparative Example 1 (voltage between 2.0 V and 4.0 V) | 463 | 12.1 |
| Comparative Example 2 (voltage between 2.0 V and 4.0 V) | 498 | 80.1 |

It can be seen from Table 11 that compared to the button cells assembled using the lithium supplements from Comparative Examples 1 and 2, the button cells assembled using the lithium supplements from Examples 1 to 8 exhibit higher initial charge specific capacities between 2.0V and 4.0V. Specifically, between 2.0V and 4.0V and at the current rate of 0.05 C, the button cells assembled using the lithium supplements from Examples 1 to 8 achieve the initial charge specific capacities range from 501 mAh/g to 520 mAh/g, and the initial discharge specific capacities range from 81 mAh/g to 90 mAh/g.

From the initial charge specific capacity and the initial discharge specific capacity of the button cells assembled using the lithium supplements from Examples 1 to 8 and Comparative Example 1, it can be seen that in the same charge-discharge voltage range (2.0V to 4.0V), the button cells assembled using the lithium supplements of the embodiments of the present application exhibit higher charge specific capacity and the initial discharge specific capacity, indicating that the lithium supplements of the embodiments of the present application have lower working voltages compared to the lithium-rich lithium iron oxide, and are more suitable for use in cathode plates of the secondary batteries.

By comparing the initial charge specific capacity and the initial discharge specific capacity of the button cells assembled using the lithium supplements from Examples 1 to 8 and Comparative Example 2, it can be seen that at the current rate of 0.05 C, the initial charge specific capacities of the button cells assembled using the lithium supplements from Examples 1 to 8 are significantly higher than that of the button cell assembled using the lithium supplement from Comparative Example 2, indicating that in the lithium supplements from Examples 1 to 8, direct exposure of the lithium phosphite to the external environment is reduced by forming the coating layer on the surface of the lithium phosphite, which is conducive to preventing phosphite ions from being oxidized into phosphate, thus reducing the formation of "dead lithium", thereby improving the lithium supplementation effect. Furthermore, the material of the coating layer is highly stable and possesses good electrical conductivity, further enhancing the conductivity and stability of the lithium supplements, thus improving the lithium supplementation effect.

(2) The lithium supplements from Examples 1 to 8 and Comparative Examples 1 to 2 were stored in the air (at 25°C and humidity of 70%) for various time periods: 1 hour, 4 hours, 24 hours, and 48 hours, and then assembled into button cells as described in (1) for testing. The test results are shown in Table 12 below:

**Table 12**

| Item | Storage time period | 1h | 4h | 24h | 48h |
|---|---|---|---|---|---|
| Example 1 | 0.05C initial charge capacity (mAh/g) | 510.1 | 505 | 502 | 501.2 |
| | 0.05C initial discharge capacity (mAh/g) | 84.6 | 83.2 | 81.5 | 80.7 |
| Example 2 | 0.05C initial charge capacity (mAh/g) | 509.7 | 504.5 | 501.5 | 501.1 |
| | 0.05C initial discharge capacity (mAh/g) | 83.9 | 82.3 | 81.4 | 81.1 |
| Example 3 | 0.05C initial charge capacity (mAh/g) | 509.0 | 504.4 | 501.4 | 501.1 |
| | 0.05C initial discharge capacity (mAh/g) | 83.7 | 82.3 | 81.3 | 81.3 |
| Example 4 | 0.05C initial charge capacity (mAh/g) | 507.4 | 502.6 | 497.8 | 488.3 |
| | 0.05C initial discharge capacity (mAh/g) | 82.6 | 80.1 | 77.2 | 75.1 |
| Example 5 | 0.05C initial charge capacity (mAh/g) | 508.1 | 504.2 | 500.8 | 498.8 |
| | 0.05C initial discharge capacity (mAh/g) | 83.1 | 82.3 | 81.1 | 79.9 |
| Example 6 | 0.05C initial charge capacity (mAh/g) | 509.1 | 504.7 | 500.9 | 499.8 |
| | 0.05C initial discharge capacity (mAh/g) | 84.2 | 82.9 | 81.7 | 80.2 |
| Example 7 | 0.05C initial charge capacity (mAh/g) | 509.3 | 504.2 | 501.1 | 500.2 |
| | 0.05C initial discharge capacity (mAh/g) | 86.7 | 82.6 | 81.1 | 80.1 |
| Example 8 | 0.05C initial charge capacity (mAh/g) | 509.2 | 504.0 | 500.4 | 499.2 |
| | 0.05C initial discharge capacity (mAh/g) | 84.2 | 82.1 | 80.5 | 79.7 |
| Comparative Example 1 (2.0 V-4.5 V) | 0.05C initial charge capacity (mAh/g) | 530.5 | 382.1 | 350.2 | 332.6 |
| | 0.05C initial discharge capacity (mAh/g) | 10.1 | 5.7 | 5.1 | 5.1 |
| Comparative Example 2 (2.0 V-4.0 V) | 0.05C initial charge capacity (mAh/g) | 460.5 | 420.1 | 387.5 | 365.4 |
| | 0.05C initial discharge capacity (mAh/g) | 73.7 | 56.3 | 43.6 | 40.2 |

It can be seen from Table 12 that the button cells assembled using the lithium supplements from Examples 1 to 8 exhibit much less change in their initial charge specific capacity and the initial discharge specific capacity as the storage time period increases at 25°C and humidity of 70%, compared to the button cells assembled using the lithium supplements from Comparative Examples 1 to 2, indicating that by forming a coating layer containing iron boride on the surface of the lithium phosphite, the capacity and stability of the lithium supplements of the embodiments of the present application are effectively enhanced, which better meet the requirements in practical applications.

It should be noted that the scope of the present application is not limited by the above implementations. The above implementations are only examples, and within the scopes of the technical solutions of the present application, any implementations having the compositions with substantially the same technical conceptions and achieving the same effects all fall within the technical scope of the present application. Furthermore, without departing from the main conception of the present application, various modifications that a person skilled in the art may conceive upon the implementations, as well as other embodiments constructed by combining part of composing elements of the implementations, are also included within the scope of the present application.

## Claims

1. A lithium supplement, comprising lithium phosphite and a coating layer coating the lithium phosphite, wherein a material of the coating layer comprises iron boride.

2. The lithium supplement according to claim 1, wherein a thickness of the coating layer is in a range from 0.6 µm to 2 µm, and/or a coverage ratio by the coating layer is greater than or equal to 93%.

3. The lithium supplement according to claim 1 or 2, wherein the lithium phosphite is in a spheroidal shape, with a sphericity of 0.81 to 0.87; and/or
a particle size distribution of the lithium supplement satisfies: a D50 particle size is in a range from 0.3 µm to 3.8 µm, a D10 particle size is in a range from 0.1 µm to 1.9 µm, and a D90 particle size is in a range from 1.3 µm to 6.4 µm.

4. The lithium supplement according to any one of claims 1 to 3, wherein a tap density of the lithium supplement is in a range from 1.43 g/mL to 1.59 g/mL; and/or a compacted density of the lithium supplement is in a range from 2.48 g/mL to 2.76 g/mL; and/or a specific surface area of the lithium supplement is in a range from 3.47 m²/g to 4.79 m²/g.

5. A method for preparing a lithium supplement, comprising:
providing a first slurry comprising lithium phosphite;
mixing the first slurry with sodium borohydride and ferrous chloride, and subjecting the mixture to a first reaction treatment to obtain a crude product; and
filtering, washing, and drying the crude product to obtain the lithium supplement,
wherein the lithium supplement comprises lithium phosphite and a coating layer coating the lithium phosphite, and a material of the coating layer comprises iron boride.

6. The method according to claim 5, wherein providing the first slurry comprising lithium phosphite comprises:
obtaining a first solution of phosphorous acid, wherein a solvent in the first solution comprises at least one of methanol, ethanol, glycerol, propanol, or propylene glycol;
adding a lithium salt to the first solution of phosphorous acid, and then subjecting to a second reaction treatment to obtain a first reaction slurry;
grinding the first reaction slurry until the lithium phosphite in the first reaction slurry reaches a preset particle size, thereby obtaining the first slurry;
wherein a molar ratio of phosphorous acid, sodium borohydride, and ferrous chloride is 1: (0.05 to 0.1): (0.025 to 0.05); and/or
a temperature of the second reaction treatment is in a range from 35°C to 55°C, and a duration of the second reaction treatment is in a range from 0.5 hours to 1 hour; and/or
the lithium salt comprises at least one of lithium carbonate, lithium sulfite, or lithium bicarbonate; and/or
a molar ratio of lithium in the lithium salt to phosphorous acid is in a range from 1.8:1 to 1.9:1; and/or
the preset particle size is in a range from 0.3 µm to 3 µm.

7. The method according to claim 6, wherein mixing the first slurry with sodium borohydride and ferrous chloride, and subjecting the mixture to the first reaction treatment to obtain the crude product comprises:
mixing a solution containing sodium borohydride, a solution containing ferrous chloride, and the first slurry, and then holding for a first preset time at a first reaction temperature to obtain the crude product;
wherein the mixing is performed for 60 minutes to 120 minutes at a temperature of 25°C to 45°C; and/or
the first reaction temperature is in a range from 25°C to 45°C; and/or
the first preset time is in a range from 30 minutes to 60 minutes.

8. The method according to any one of claims 5 to 7, wherein the drying is performed at a temperature in a range from 80°C to 100°C and a vacuum degree in a range from -0.09 MPa to -0.07 MPa.

9. A cathode plate, comprising a current collector and a cathode material disposed on at least one side of the current collector along a thickness direction of the current collector, wherein the cathode material comprises the lithium supplement according to any one of claims 1 to 4 or the lithium supplement prepared by the method according to any one of claims 5 to 8.

10. A secondary battery, comprising a cathode plate, an anode plate, and a separator, wherein the cathode plate is selected from the cathode plate according to claim 9.
